# FASCICULE DE BREVET EUROPEEN

(11) **EP 3 241 039 B1**
(45) Date de publication et mention de la délivrance du brevet: **17.02.2021**
(21) Numéro de dépôt: 15817427.6
(22) Date de dépôt: 30.12.2015
(51) Int. Cl.: G01S 7/40, G01S 13/93, G01S 13/86, H01Q 5/22

(54) **DISPOSITIF D'IMAGERIE MULTI-SENSEURS**
ABBILDUNGSVORRICHTUNG MIT MEHREREN SENSOREN
MULTISENSOR IMAGING DEVICE

(30) Priorité: 30.12.2014 FR 1403046
(43) Date de publication de la demande: 08.11.2017
(73) Titulaire: Thales, 92400 Courbevoie (FR)
(72) Inventeur: GARREC, Patrick, 33608 Pessac Cedex (FR); MONTIGNY, Richard, 33608 Pessac Cedex (FR); FORMONT, Stéphane, 78851 Elancourt Cedex (FR)
(74) Mandataire: Lavoix
(86) Numéro de dépôt international: PCT/EP2015/081426
(87) Numéro de publication internationale: WO 2016/107908

(56) Documents cités:
- EP-A1- 2 778 711
- EP-A1- 2 778 711
- JP-A- 2012 203 455
- US-A- 4 651 001
- US-A- 4 654 622
- US-A- 5 436 453
- US-A- 5 436 453
- US-A1- 2003 201 929
- US-A1- 2003 201 929
- US-A1- 2011 122 012
- US-A1- 2011 122 012
- US-A1- 2014 104 095
- US-A1- 2014 104 095
- US-B1- 6 329 649
- US-B1- 7 358 497
- US-B1- 7 358 497

## Description

La présente invention concerne un dispositif d'imagerie apte à être embarqué sur un porteur mobile.

L'invention se situe dans le domaine de l'imagerie multi-senseurs, trouvant de nombreuses applications dans les domaines de l'aéronautique, du ferroviaire, et des transports terrestre et naval.

En particulier, l'invention trouve des applications dans les domaines de la surveillance, de détection et d'évitement (en anglais « sense-and-avoid ») dans le domaine de l'aéronautique civile ou militaire, de désignation de zones d'intérêt, d'assistance automatique à l'atterrissage.

Dans ces divers domaines, il est connu d'équiper un porteur mobile, par exemple un aéronef, de plusieurs systèmes de capture, à la fois d'un système radiofréquence apte à réaliser des fonctions de détection et de surveillance radar, et d'un système optronique apte à fournir des images numériques de scènes ou d'objets surveillés.

De manière classique, le porteur mobile est équipé de deux ou plusieurs tels systèmes distincts, situés à des endroits distincts. Par exemple, le porteur mobile est équipé d'un système radiofréquence radar multimodes, incluant des modes d'acquisition d'images (SAR pour « synthetic aperture radar », ISAR pour »inverse synthetic aperture radar ») et des modes de détection de cible (GMTI pour « ground moving target indicator ») et d'un système optronique ayant des capacités dans le domaine du visible et/ou dans le domaine de l'infrarouge, fournissant des données élaborées de manière indépendante. En effet, les systèmes de capture des données étant distincts et indépendants, les portées et les angles de capture sont différents. La cadence des mesures effectuées par ces systèmes de capture ainsi que la complétude des mesures et la résolution angulaire diffèrent.

Par conséquent, un recalage spatial et/ou temporel des données d'image est nécessaire pour fusionner les données d'image obtenues dans un référentiel commun.

La demande de brevet EP 2 769 239 A2 décrit un procédé et un système de création de cartes de terrain par combinaison de données radar et des données d'image, les systèmes radiofréquence et optroniques respectifs étant positionnés côte-à-côte sur un véhicule en mouvement. Les données acquises sont alignées, de manière à recaler les champs de capture des deux systèmes, et combinées pour obtenir une cartographie des scènes capturées. Le recalage des données nécessite des moyens de calcul importants, et un recalage erroné ne permet pas une fusion correcte des données.

Le document US2011/0122012 A1 décrit un dispositif de mesure de distance comportant un senseur de type CCD.

Le document US 4651001 décrit un dispositif d'imagerie intégré comportant des senseurs de lumière visible et de lumière infraorouge.

Il existe un besoin de remédier aux inconvénients de l'état de la technique pour aboutir à une meilleure exploitation des données fournies par des senseurs multiples.

A cet effet, suivant un premier aspect, l'invention propose un dispositif d'imagerie apte à être embarqué sur un porteur mobile. Ce dispositif d'imagerie comporte un panneau de support multi-senseurs comportant une surface de rayonnement comportant une pluralité d'éléments rayonnants formant un réseau antennaire, lesdits éléments rayonnants étant associés à un module radiofréquence permettant de réaliser une fonction radar, et une pluralité de senseurs optiques positionnés sur ledit panneau de support multi-senseurs et répartis entre les éléments rayonnants selon un mode de répartition prédéterminé, lesdits senseurs optiques étant aptes à fournir des images numériques.

Les senseurs optiques sont des capteurs photographiques parmi un premier type de capteurs photographiques aptes à fonctionner dans le domaine des ondes électromagnétiques visibles et un deuxième type de capteurs photographiques aptes à fonctionner dans le domaine des ondes électromagnétiques du domaine infrarouge.

Au moins certains des capteurs photographiques de premier type sont positionnés dans un premier plan de référence, et au moins certain des capteurs photographiques de deuxième type sont positionnés dans un deuxième plan de référence décalé par rapport au premier plan de référence.

Le dispositif d'imagerie selon l'invention permet avantageusement, grâce à l'intégration sur un même panneau multi-senseurs, de bénéficier des données fournies par plusieurs types de senseurs qui ont des champs de capture naturellement co-localisés, donc aucun recalage n'est requis.

Dans des modes de réalisation, le dispositif d'imagerie suivant l'invention comporte en outre une ou plusieurs des caractéristiques selon les revendications dépendantes.

Des caractéristiques et avantages de l'invention ressortiront de la description qui en est donnée ci-dessous, à titre indicatif et nullement limitatif, en référence aux figures annexées, parmi lesquelles :
- la figure 1 représente schématiquement un synoptique d'un dispositif d'imagerie selon un mode de réalisation de l'invention ;
- la figure 2 représente schématiquement un panneau multi-senseurs selon un mode de réalisation de l'invention ;
- la figure 3 représente schématiquement, en vue de dessus, un premier mode de réalisation d'un panneau multi-senseurs selon l'invention ;
- la figure 4 représente schématiquement, en vue de dessus, un deuxième mode de réalisation d'un panneau multi-senseurs selon l'invention ;
- la figure 5 représente schématiquement, en vue de dessus, un troisième mode de réalisation d'un panneau multi-senseurs selon l'invention ;
- la figure 6 représente schématiquement un décalage de plans de référence des capteurs ;
- la figure 7 représente schématiquement, en vue de dessus, un quatrième mode de réalisation d'un panneau multi-senseurs selon l'invention.

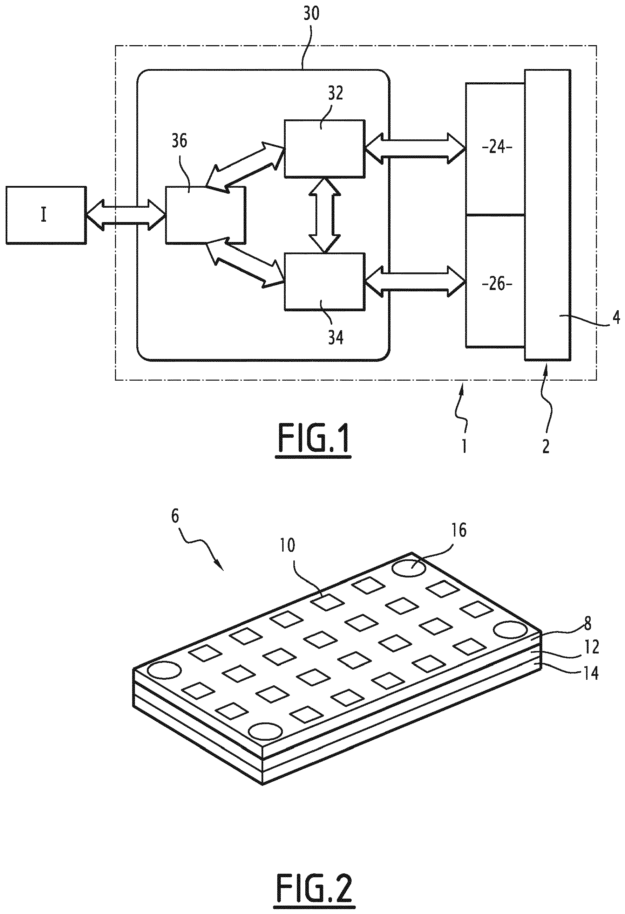

La figure 1 représente dispositif d'imagerie 1 selon un mode de réalisation de l'invention.

Le dispositif d'imagerie 1 comporte un dispositif multi-senseurs 2 comportant un panneau de support multi-senseurs 4 sur lequel sont intégrés d'une part des senseurs radiofréquence et des senseurs optiques, représentés dans divers modes de réalisation dans les figures suivantes 2 à 7.

Le panneau de support multi-senseurs 4 est, dans un mode de réalisation, une antenne planaire, apte à fonctionner en émission et en réception dans une bande de fréquence donnée, par exemple la bande X, de 8 GHz à 12 GHz, modifiée pour intégrer des senseurs optiques.

Selon l'invention, des senseurs optiques sont avantageusement intégrés dans une telle antenne planaire afin de réaliser, de manière conjointe, un système radiofréquence permettant d'implémenter une fonction radar et un système optronique apte à fournir des images numériques.

Dans un mode de réalisation, illustré schématiquement à la figure 2, un panneau de support multi-senseurs 6 a une structure similaire à une antenne planaire et comporte une surface de rayonnement 8, de préférence en résine époxy, comportant une pluralité d'éléments rayonnants 10 formant un réseau antennaire. La surface de rayonnement 8 est posée sur une couche d'espacement 12 en matériau diélectrique, elle-même posée sur un plan réflecteur 14, ou plan de masse, en matériau conducteur.

Selon divers modes de réalisation de l'invention, outre les éléments rayonnants 10 d'une antenne planaire connue, des senseurs optiques 16 sont positionnés sur la surface de rayonnement 8, afin d'obtenir conjointement des données d'image numérique et des données radar.

Plusieurs modes de réalisation de l'invention sont envisagés.

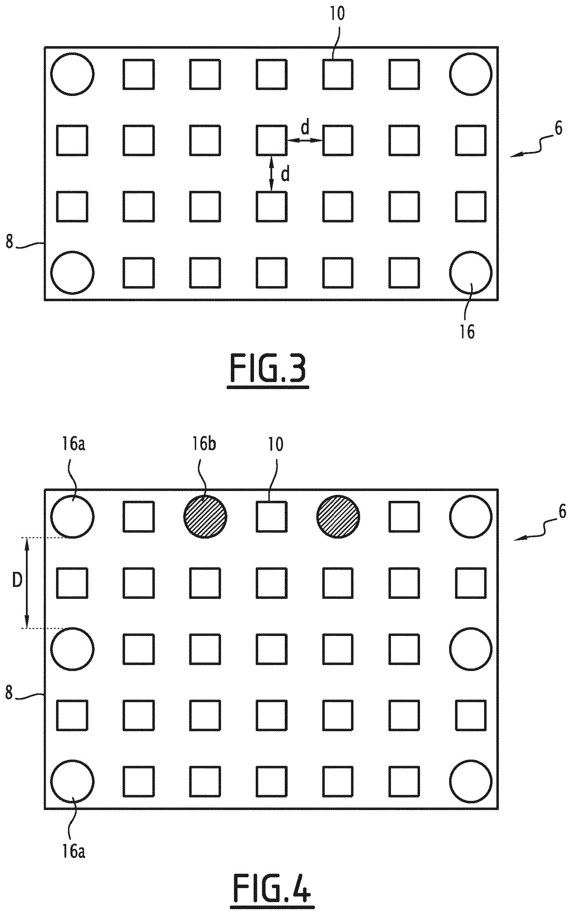

Selon un premier mode de réalisation illustré à la figure 3, un panneau de support multi-senseurs 6 a une forme rectangulaire, et comporte, sur la surface de rayonnement 8, un réseau d'éléments rayonnants 10 de forme carrée, disposés selon un motif périodique régulier, deux éléments rayonnants 10 étant espacés d'une distance d de λ/2, où λ est la longueur d'onde correspondant au rayonnement de l'antenne 6 formée par le réseau d'éléments rayonnants 10.

Dans le mode de réalisation illustré, des éléments rayonnants 10 situés aux coins de la surface de rayonnement rectangulaire sont remplacés par des senseurs optiques 16, selon un premier mode de répartition desdits senseurs optiques.

Dans ce mode de réalisation, les senseurs optiques 16 sont des capteurs photographiques, de type CCD (pour « charge coupled device ») ou CMOS (pour « Complementary Metal Oxide Semiconductor ») par exemple, aptes à fonctionner soit dans le domaine des rayonnements visibles, soit dans le domaine infrarouge.

Chaque tel capteur photographique est apte à faire l'acquisition d'une image numérique d'environ 10 mégapixels.

Les senseurs optiques 16 sont positionnés de manière à ne pas perturber le diagramme de rayonnement de l'antenne.

Dans un deuxième mode de réalisation, illustré à la figure 4, deux types de capteurs photographiques, des capteurs photographiques 16a aptes à fonctionner dans le domaine du visible et des capteurs photographiques 16b aptes à fonctionner dans le domaine infrarouge sont positionnés sur les bords de la surface de rayonnement 8, selon un deuxième mode de répartition des senseurs optiques.

Le positionnement est lacunaire, la distance minimale D entre deux capteurs photographiques étant bien supérieure à la distance d entre deux éléments rayonnants 10, de manière à préserver le diagramme d'antenne de l'antenne formée par les éléments rayonnants 10.

Si moins de 10% des éléments rayonnants sont manquants, les manques ou trous étant non régulièrement répartis, l'antenne est lacunaire, et comporte des dégradations minimales.

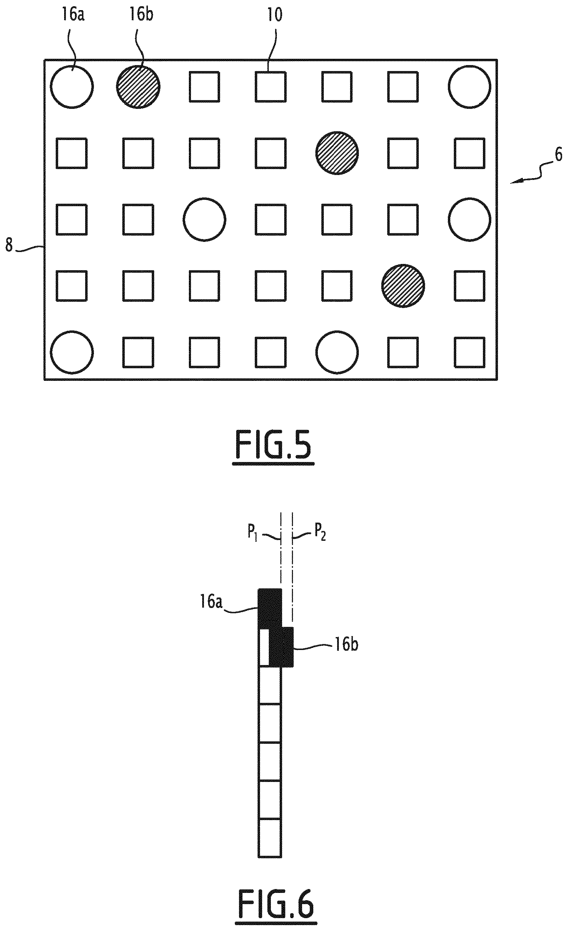

Selon un troisième mode de réalisation illustré à la figure 5, les capteurs photographiques sont positionnés à divers endroits de la surface de rayonnement 8, la répartition des capteurs 16a, 16b étant effectuée de manière pseudo-aléatoire, selon un troisième mode de répartition des senseurs optiques.

De préférence, les capteurs de type 16a et les capteurs de type 16b sont décalés par rapport à la surface de rayonnement 8, comme illustré schématiquement à la figure 6.

Les capteurs 16a sont positionnés dans un premier plan de référence P₁, et les capteurs 16b sont positionnés dans un deuxième plan de référence P₂, les deux plans de référence P₁ et P₂ étant en décalage.

En variante, le décalage de plan de référence est appliqué pour divers capteurs choisis, indépendamment de leur type, certains des capteurs 16a, 16b étant situé dans le premier plan de référence P₁, d'autres capteurs 16a, 16b étant situés dans le deuxième plan de référence P₂.

Avantageusement, les données d'images collectées permettront, grâce au décalage entre le premier plan de référence et le deuxième plan de référence, de reconstruire une image à trois dimensions, ou image 3D, de la scène captée.

Selon un quatrième mode de réalisation, un panneau de support multi-senseurs 18 comporte des senseurs optiques 20 sont réalisés en utilisant des fibres optiques permettant de transporter le rayonnement optique capté vers des récepteurs optiques déportés par rapport à la surface de rayonnement 8. Un tel fonctionnement est analogue au fonctionnement des caméras utilisées en endoscopie.

Dans ce mode de réalisation, les senseurs optiques 20 sont positionnés sur la surface de rayonnement 8 selon un motif de répartition régulier, entrelacés avec les éléments rayonnants 22, selon un quatrième mode de répartition.

Avantageusement dans ce mode de réalisation, il n'y a pas d'élément métallique conducteur positionné sur la surface de rayonnement 8, et donc pas de perturbation du diagramme d'antenne du réseau antennaire formé par les éléments rayonnants 22.

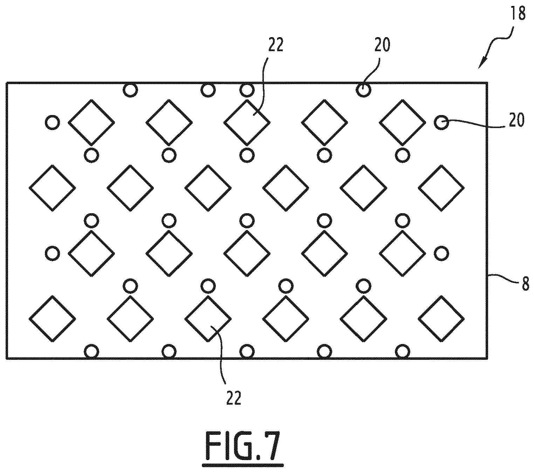

Dans le mode de réalisation illustré à la figure 7, les éléments rayonnants sont de forme carrée, positionnés en quinconce.

Il est bien entendu que d'autres modes de réalisation sont envisageables, en ce qui concerne la forme des éléments rayonnants, leur positionnement et le motif de répétition sur la surface de rayonnement.

Par exemple, dans un mode de réalisation, qui peut être combiné avec les modes de réalisation précédemment décrits, la répartition des senseurs optiques respecte une lacunarité des éléments rayonnants non régulière et une valeur maximale de lacunarité, lesdits éléments rayonnants étant espacés d'une demi longueur d'onde.

De retour à la figure 1, le dispositif multi-senseurs 4 comporte également un récepteur radiofréquence 24, connecté en sortie du support multi-senseurs 4, pour la mise en forme des signaux radiofréquence reçus par le réseau antennaire.

Le récepteur radiofréquence 24 réalise une amplification, un filtrage et une multiplication au moyen d'un mélangeur pour obtenir en sortie des signaux en fréquence intermédiaire ou en bande de base.

Dans le quatrième mode de réalisation de la figure 7, le dispositif multi-senseurs 4 comporte également un ensemble 26 de récepteurs optiques de type CCD ou CMOS, aptes à transformer le rayonnement électromagnétique capté par les senseurs 20 en signal électrique appelé signal d'image.

Dans les modes de réalisation dans lesquels des capteurs photographiques sont directement positionnés sur la surface de rayonnement 8, l'ensemble 22 de récepteurs n'est pas présent.

Finalement en sortie du dispositif multi-senseurs 4 on obtient des signaux radiofréquence et des signaux d'image qui sont transmis à un dispositif de calcul 30, comprenant un ou plusieurs processeurs et des unités de mémoire pour le stockage de données.

Le dispositif de calcul 30 comprend un module 32 de traitement radar et un module 34 de traitement d'images.

Le dispositif de calcul 30 comprend également une interface opérateur 36, permettant à un opérateur de commander des traitements à effectuer, de visualiser des images d'intérêt, de focaliser sur divers plans des données d'images obtenues.

Le module 32 reçoit des signaux en fréquence intermédiaire ou en bande de base du module de réception radiofréquence 24, et envoie des commandes de contrôle à ce module de réception radiofréquence 24, et réalise des fonctions de traitement radar, par exemple l'extraction de la distance et de la vitesse d'une cible détectée.

Dans le cas où plusieurs cibles sont détectées, l'extraction de la vitesse et de la distance est effectuée pour chaque cible.

Le module de traitement radar 32 transmet des premières informations de contrôle, relatives à la ou aux cibles détectées, au module de traitement d'image 34, et est également apte à recevoir des deuxièmes informations de contrôle en provenance du module de traitement d'image 34.

En outre, le module de traitement radar 32 est apte, dans un mode de réalisation, à réaliser des images numériques de types SAR, et à les transmettre au module de traitement d'image 34 pour comparaison.

Le module de traitement d'image 34 est apte à fusionner les signaux d'images issus des différents capteurs optiques pour générer une image numérique super-résolue.

Grâce aux informations relatives à la ou aux cibles détectées le module de traitement d'image 34 est apte à extraire au moins une sous-image localisée dans l'image numérique sur-résolue, en fonction des premières informations de contrôle fournies par le module de traitement radar.

Ainsi, le module de traitement d'image 34 réalise une fonction de zoom sur zones multiples, guidée par un des modes radar tels que la détection des cibles mobiles ou fixes.

Les images numériques obtenues par les senseurs optiques sont avantageusement stabilisées image à image, en utilisant les premières informations de contrôle radar.

En outre, le module de traitement d'images 34 effectue également des contrôles permettant de transmettre des deuxièmes informations de contrôle au module de traitement radar 32.

Par exemple, les données d'image contenues dans les images numériques captées sont utilisées pour réaliser des identifications de zones d'intérêt par traitement d'image, selon des méthodes connues dans le domaine du traitement d'images. Ensuite, les zones d'intérêt identifiées sont transformées en deuxièmes informations de contrôle permettant de focaliser de manière améliorée la détection de cible par radar.

Lorsque les capteurs optiques sont positionnés de manière décalée entre un premier plan de référence P₁ et un deuxième plan de référence P₂ comme expliqué ci-dessus, il est possible de reconstruire des images 3D par traitement d'images, qui peuvent ensuite être utilisées pour lever des ambiguïtés dans les modes de surveillance du radar.

Le décalage entre un premier plan de référence P₁ et un deuxième plan de référence P₂ comme expliqué ci-dessus s'applique pour tous les modes de réalisation du dispositif d'imagerie.

Ainsi, l'utilisation coopérative du module de traitement radar 32 et du module de traitement d'image 34 permet de réduire de manière importante les flux de données d'une image d'intérêt I, fournie en sortie du dispositif d'imagerie 1, à la requête d'un opérateur via l'interface opérateur 36 ou à la requête d'une application cliente externe.

Avantageusement, la quantité de données d'image pour le stockage et la transmission sur des réseaux de communication est réduite.

La coopération entre les modules de traitement radar 32 et de traitement d'image 34 permet également d'autres fonctionnalités, grâce à l'harmonisation entre données radar et données d'image fournies par les senseurs optiques.

De plus, grâce à la co-localisation spatiale sur un même panneau de support multi-senseurs des senseurs radiofréquence et des senseurs optiques, aucun recalage n'est nécessaire pour l'exploitation des données captées.

## Revendications

1. Dispositif d'imagerie (1) apte à être embarqué sur un porteur mobile, comportant un panneau de support multi-senseurs (4, 6, 18) comportant une surface de rayonnement (8) comportant une pluralité d'éléments rayonnants (10, 22) formant un réseau antennaire, lesdits éléments rayonnants étant associés à un module radiofréquence (24) permettant de réaliser une fonction radar, et une pluralité de senseurs optiques (16, 16a, 16b, 20) positionnés sur ledit panneau de support multi-senseurs (4, 6, 18, lesdits senseurs optiques (16, 16a, 16b, 20) étant aptes à fournir des images numériques, **caractérisé en ce que** lesdits senseurs optiques (16a, 16b) sont répartis entre les éléments rayonnants selon un mode de répartition prédéterminé, **en ce que** lesdites senseurs optiques sont des capteurs photographiques parmi un premier type de capteurs photographiques aptes à fonctionner dans le domaine des ondes électromagnétiques visibles et un deuxième type de capteurs photographiques aptes à fonctionner dans le domaine des ondes électromagnétiques du domaine infrarouge, et **en ce qu'**au moins certains des capteurs photographiques (16a) de premier type sont positionnés dans un premier plan de référence, et **en ce qu'**au moins certains des capteurs photographiques (16b) de deuxième type sont positionnés dans un deuxième plan de référence décalé par rapport au premier plan de référence.

2. Dispositif d'imagerie selon la revendication 1, **caractérisé en ce que** le panneau de support multi-senseurs (4, 6, 18) est rectangulaire et **en ce que** les senseurs optiques (16, 16a, 16b) sont positionnés sur au moins un des bords du panneau de support multi-senseurs.

3. Dispositif d'imagerie selon l'une quelconque des revendications 1 ou 2, **caractérisé en ce que** les senseurs optiques (16a, 16b) sont positionnés selon une répartition pseudo-aléatoire.

4. Dispositif d'imagerie selon la revendication 3, **caractérisé en ce que** deux senseurs optiques voisins de même type sont distants d'une distance supérieure à une distance minimale prédéterminée.

5. Dispositif d'imagerie selon l'une quelconque des revendications précédentes, **caractérisé en ce que** la répartition des senseurs optiques respecte une lacunarité des éléments rayonnants non régulière et une valeur maximale de lacunarité, lesdits éléments rayonnants étant espacés d'une demi longueur d'onde.

6. Dispositif d'imagerie selon l'une quelconque des revendications 1 à 5, **caractérisé en ce qu'**au moins un senseur optique (16, 20) comprend une extrémité de fibre optique, reliée à un récepteur optique positionné à distance du panneau de support multi-senseurs (18).

7. Dispositif d'imagerie selon la revendication 6, **caractérisé en ce qu'**il comprend une pluralité de fibres optiques, dont les senseurs optiques sont répartis entre les éléments rayonnants selon un motif de répartition régulier.

8. Dispositif d'imagerie selon l'une quelconque des revendications 1 à 7, **caractérisé en ce qu'**il comprend un dispositif de calcul (30) comprenant au moins un processeur, le dispositif de calcul (30) comportant un module de traitement radar (32) de signaux radiofréquence issus dudit module radiofréquence et un module de traitement d'image (34) de signaux d'image numériques obtenus, lesdits modules de traitement radar (32) et de traitement d'image (34) étant aptes à coopérer.

9. Dispositif d'imagerie selon la revendication 8, **caractérisé en ce que** le module de traitement d'image (34) est apte à former une image numérique sur-résolue par fusion des signaux d'image reçus.

10. Dispositif d'imagerie selon la revendication 9, **caractérisé en ce que** :
- le module de traitement radar (32) est apte à localiser au moins une cible et à transmettre des premières informations de contrôle au module de traitement d'image (34),
- le module de traitement d'image (34) est apte à extraire au moins une sous-image localisée dans l'image numérique sur-résolue, en fonction des premières informations de contrôle.

11. Dispositif d'imagerie selon l'une quelconque des revendications 9 à 10, **caractérisé en ce que** le module de traitement d'image (34) est apte à réaliser une détection de zones d'intérêt sur l'image numérique sur-résolue et à transmettre des deuxièmes informations de contrôle au module de traitement radar (32), permettant au module de traitement radar (32) de guider le module radiofréquence (24).

12. Dispositif d'imagerie selon l'une quelconque des revendications 1 à 11, **caractérisé en ce qu'**en outre, au moins certains des capteurs photographiques (16a) de premier type sont positionnés dans le deuxième plan de référence, et au moins certains des capteurs photographiques (16b) de deuxième type sont positionnés dans le premier plan de référence.

## Patentansprüche

1. Anzeigevorrichtung (1), die dazu eingerichtet ist, in einem mobilen Endgerät eingebaut zu sein, aufweisend eine Mehrfachsensoren-Trägerplatte (4, 6, 18), die eine Abstrahlfläche (8) aufweist, die eine Mehrzahl von Strahlerelementen (10, 22), die ein Antennennetzwerk bilden, aufweist, wobei die Strahlerelemente mit einem Hochfrequenzmodul (24) verbunden sind, das eine Radarfunktion ausführen kann, und eine Mehrzahl von optischen Sensoren (16, 16a, 16b, 20), die auf der Mehrfachsensoren-Trägerplatte (4, 6, 18) angeordnet sind,
wobei die optischen Sensoren (16, 16a, 16b, 20) dazu eingerichtet sind, digitale Bilder bereitzustellen,
**dadurch gekennzeichnet,**
**dass** die optischen Sensoren (16a, 16b) zwischen den Strahlerelementen entsprechend einer vorher festgelegten Verteilung verteilt sind,
**dass** die optischen Sensoren Photosensoren aus einem ersten Typ von Photosensoren, die dazu eingerichtet sind, in dem Bereich der sichtbaren elektromagnetischen Wellenlängen zu arbeiten, und einem zweiten Typ von Photosensoren, die dazu eingerichtet sind, in dem Bereich der infraroten elektromagnetischen Wellenlängen zu arbeiten, sind, und
**dass** zumindest bestimmte der Photosensoren (16a) des ersten Typs in einer ersten Bezugsebene angeordnet sind und dass zumindest bestimmte der Photosensoren (16b) des zweiten Typs in einer zweiten Bezugsebene, die in Bezug auf die erste Bezugsebene versetzt ist, angeordnet sind.

2. Anzeigevorrichtung gemäß Anspruch 1, **dadurch gekennzeichnet, dass** die Mehrfachsensoren-Trägerplatte (4, 6, 18) rechteckig ist und dass die optischen Sensoren (16, 16a, 16b) auf mindestens einer der Kanten der Mehrfachsensoren-Trägerplatte angeordnet sind.

3. Anzeigevorrichtung gemäß einem der Ansprüche 1 oder 2, **dadurch gekennzeichnet, dass** die optischen Sensoren (16a, 16b) gemäß einer pseudo-zufälligen Verteilung angeordnet sind.

4. Anzeigevorrichtung gemäß Anspruch 3, **dadurch gekennzeichnet, dass** zwei benachbarte optische Sensoren des gleichen Typs in einem Abstand voneinander entfernt sind, der größer ist als ein vorher festgelegter minimaler Abstand.

5. Anzeigevorrichtung gemäß einem der vorangehenden Ansprüche, **dadurch gekennzeichnet, dass** die Verteilung der optischen Sensoren einen unregelmäßigen Abstand von den Strahlerelementen und einen maximalen Abstandwert einhält, wobei die Strahlerelemente eine halbe Wellenlänge voneinander entfernt angeordnet sind.

6. Anzeigevorrichtung gemäß einem der Ansprüche 1 bis 5, **dadurch gekennzeichnet, dass** mindestens ein optischer Sensor (16, 20) ein Glasfaserende aufweist, das mit einem optischen Empfänger, der in einem Abstand von der Mehrfachsensoren-Trägerplatte (18) entfernt angeordnet ist, verbunden ist.

7. Anzeigevorrichtung gemäß Anspruch 6, **dadurch gekennzeichnet, dass** sie eine Mehrzahl von Glasfasern aufweist, wobei die optischen Sensoren gemäß einem regelmäßigen Verteilungsmuster zwischen den Strahlerelementen verteilt sind.

8. Anzeigevorrichtung gemäß einem der Ansprüche 1 bis 7, **dadurch gekennzeichnet, dass** sie eine Rechenvorrichtung (30), die mindestens einen Prozessor aufweist, aufweist, wobei die Rechenvorrichtung (30) ein Radarverarbeitungsmodul (32) für Hochfrequenzsignale, die von dem Radarverarbeitungsmodul ausgegeben werden, und ein Bildverarbeitungsmodul (34) für erhaltene digitale Bildsignale aufweist, wobei das Radarverarbeitungsmodul (32) und das Bildverarbeitungsmodul (34) dazu eingerichtet sind, miteinander zusammenzuwirken.

9. Anzeigevorrichtung gemäß Anspruch 8, **dadurch gekennzeichnet, dass** das Bildverarbeitungsmodul (34) dazu eingerichtet ist, mittels Zusammenführens der empfangenen Bildsignale ein hochaufgelöstes digitales Bild zu bilden.

10. Anzeigevorrichtung gemäß Anspruch 9, **dadurch gekennzeichnet, dass**:
- das Radarverarbeitungsmodul (32) dazu eingerichtet ist, mindestens ein Ziel zu lokalisieren und erste Steuerinformationen an das Bildverarbeitungsmodul (34) zu übertragen,
- das Bildverarbeitungsmodul (34) dazu eingerichtet ist, in Abhängigkeit von den ersten Steuerinformationen mindestens ein Teilbild, das in dem hochaufgelösten digitalen Bild enthalten ist, zu extrahieren.

11. Anzeigevorrichtung gemäß einem der Ansprüche 9 bis 10, **dadurch gekennzeichnet, dass** das Bildverarbeitungsmodul (34) dazu eingerichtet ist, auf dem hochaufgelösten digitalen Bild eine Ermittlung von Interessenszonen durchzuführen und zweite Steuerinformationen an das Radarverarbeitungsmodul (32) zu übertragen, die es dem Radarverarbeitungsmodul (32) erlauben, das Hochfrequenzmodul (24) zu steuern.

12. Anzeigevorrichtung gemäß einem der Ansprüche 1 bis 11, **dadurch gekennzeichnet, dass** ferner zumindest bestimmte der optischen Sensoren (16a) des ersten Typs in der zweiten Bezugsebene angeordnet sind, und zumindest bestimmte der optischen Sensoren (16b) des zweiten Typs in der ersten Bezugsebene angeordnet sind.

## Claims

1. Imaging device (1) capable of being mounted on a mobile carrier, comprising a multi-sensor support panel (4, 6, 18) having a radiation surface (8) having a plurality of radiating elements (10, 22) forming an antenna array, said radiating elements being associated with a radiofrequency module (24) allowing a radar function to be performed, and a plurality of optical sensors (16, 16a, 16b, 20) positioned on said multi-sensor support panel (4, 6, 18), said optical sensors (16, 16a, 16b, 20) being capable of providing digital images, **characterised in that** said optical sensors (16a, 16b) are distributed between the radiating elements in accordance with a predetermined distribution mode, **in that** said optical sensors are photographic sensors from among a first type of photographic sensors capable of functioning in the visible electromagnetic wave range and a second type of photographic sensors capable of functioning in the electromagnetic wave range of the infra-red range, and **in that** at least some of the photographic sensors (16a) of the first type are positioned in a first reference plane, and **in that** at least some of the photographic sensors (16b) of the second type are positioned in a second reference plane which is offset relative to the first reference plane.

2. Imaging device according to claim 1, **characterised in that** the multi-sensor support panel (4, 6, 18) is rectangular, and **in that** the optical sensors (16, 16a, 16b) are positioned on at least one of the edges of the multi-sensor support panel.

3. Imaging device according to either claim 1 or claim 2, **characterised in that** the optical sensors (16a, 16b) are positioned in accordance with a pseudo-random distribution.

4. Imaging device according to claim 3, **characterised in that** two adjacent optical sensors of the same type are distant by a distance which is greater than a predetermined minimum distance.

5. Imaging device according to any one of the preceding claims, **characterised in that** the distribution of the optical sensors respects a non-regular lacunarity of the radiating elements and a maximum lacunarity value, said radiating elements being spaced apart by a half wavelength.

6. Imaging device according to any one of claims 1 to 5, **characterised in that** at least one optical sensor (16, 20) comprises an optical fibre end connected to an optical receiver positioned at a distance from the multi-sensor support panel (18).

7. Imaging device according to claim 6, **characterised in that** it comprises a plurality of optical fibres, the optical sensors of which are distributed between the radiating elements in accordance with a regular distribution pattern.

8. Imaging device according to any one of claims 1 to 7, **characterised in that** it comprises a computation device (30) comprising at least one processor, the computation device (30) comprising a radar processing module (32) for radiofrequency signals coming from said radiofrequency module and an image processing module (34) for digital image signals obtained, said radar processing module (32) and image processing module (34) being capable of cooperating.

9. Imaging device according to claim 8, **characterised in that** the image processing module (34) is capable of forming an over-resolved digital image by fusion of the received image signals.

10. Imaging device according to claim 9, **characterised in that**:
- the radar processing module (32) is capable of locating at least one target and of transmitting first control information to the image processing module (34),
- the image processing module (34) is capable of extracting at least one sub-image located in the over-resolved digital image, as a function of the first control information.

11. Imaging device according to either claim 9 or claim 10, **characterised in that** the image processing module (34) is capable of performing a detection of zones of interest on the over-resolved digital image and of transmitting second control information to the radar processing module (32), allowing the radar processing module (32) to guide the radiofrequency module (24).

12. Imaging device according to any one of claims 1 to 11, **characterised in that**, further, at least some of the photographic sensors (16a) of the first type are positioned in the second reference plane, and at least some of the photographic sensors (16b) of the second type are positioned in the first reference plane.
